# EUROPEAN PATENT APPLICATION

(11) **EP 2 592 567 A1**
(43) Date of publication of application: **15.05.2013**
(21) Application number: 12176453.4
(22) Date of filing: 13.07.2012
(51) Int. Cl.: G06F 17/27, G06F 3/048, G06F 3/023

(54) **Methods and systems for removing or replacing keyboard prediction candidates**

(30) Priority: 10.11.2011 US 201113373356; 29.05.2012 US 201213482705
(71) Applicant: Research In Motion Limited, Waterloo, ON N2L 3W8 (CA)
(72) Inventor: Pasquero, Jerome, Waterloo, Ontario N2L 3W8 (CA); Pinheiro, Gil, Waterloo, Ontario N2L 3W8 (CA); McKenzie, Donald Somerset, Waterloo, Ontario N2L 3W8 (CA)
(74) Representative: Finnie, Peter John

(57) **Abstract**

Methods and electronic devices are provided for processing prediction candidates in connection with virtual keyboards and touch-sensitive displays. A display area of the touch-sensitive displays a virtual keyboard. Within the virtual keyboard is a plurality of keys, each of at least some of the keys corresponding to one or more different characters of a plurality of characters. The methods and devices may detect a selection of one or more of the keys. The methods and devices may generate one or more sets of characters based on the one or more characters corresponding to the selected key. The methods and devices may display the sets of characters within or substantially within the virtual keyboard. The methods and devices may detect a gesture associated with one of the displayed sets of characters, and, in response to detecting the gesture, remove the one of the displayed sets of characters from the virtual keyboard.

## Description

### RELATED APPLICATION DATA

This application is a continuation-in-part of co-pending U.S. Application No. 13/482,705, filed May 29, 2012, which is a continuation-in-part of co-pending U.S. Application No. 13/373,356, filed November 10, 2011.

### FIELD

Example embodiments relate to processing prediction candidates in connection with virtual keyboards and touch-sensitive displays.

### BACKGROUND

Increasingly, electronic devices, such as computers, netbooks, cellular phones, smart phones, personal digital assistants, and tablets, etc., have touch-sensitive displays that allow a user to input characters into an application, such as a word processor or email application. Character input on touch-sensitive displays can be a cumbersome task due to, for example, a small touch-sensitive display area, particularly where a user needs to input a long message. For example, for text entry the touch-sensitive display is typically divided into two areas, a first portion for displaying an interactive virtual keyboard having a set of selectable keys and a second portion for displaying selected input associated with the keys.

Predictive text input solutions have been introduced for assisting with input on an electronic device. These solutions include predicting a word a user is entering after, for example, the user inputs one or more characters of the word, and offering to the user one or more suggestions for one or more additional characters to complete the word input. Similarly, some word prediction solutions offer users full word predictions based, for example, on the context of other words previously input by the user alone or with the assistance of a word prediction solution.

### BRIEF DESCRIPTION OF THE DRAWINGS

Reference will now be made to the accompanying drawings showing example embodiments of this disclosure. In the drawings:

**Fig. 1** is a simplified block diagram illustrating an example mobile communication device in accordance with an example embodiment.

**Fig. 2** is a flowchart illustrating an example method for predicting and displaying selected sets of characters.

**Fig.** 3 is a flowchart illustrating an example method for removing displayed sets of characters.

**Fig. 4** is a flowchart illustrating an example method for replacing displayed sets of characters.

**Fig. 5** is a flowchart illustrating an example method for replacing displayed sets of characters.

**Fig. 6** is a flowchart illustrating an example method for replacing displayed sets of characters.

**Fig. 7** shows an example front view of a touch-sensitive display in accordance with an example embodiment.

**Fig. 8** shows an example front view of a touch-sensitive display in accordance with an example embodiment.

**Fig. 9** shows an example front view of a touch-sensitive display in accordance with an example embodiment.

**Fig. 10** shows an example front view of a touch-sensitive display in accordance with an example embodiment.

### DETAILED DESCRIPTION

In electronic devices with touch-sensitive displays that allow a user to input characters into an application where the touch-sensitive display is divided, for example, into two areas, a first portion for displaying an interactive virtual keyboard having a set of selectable keys and a second portion for displaying selected input associated with the keys, the user often has to divert focus from the virtual keyboard to view input reflected by selected keys in the second portion or to consider suggested character(s) of a predictive text process displayed in the second portion, and thereafter, look back at the keyboard to continue typing. Refocusing of one's eyes relative to the keyboard while inputting information in an electronic device, particularly when composing large texts, can strain the eyes and be cumbersome, distracting, and otherwise inefficient. Moreover, processing cycles are lost and display power wasted as the processor is idling while the user is focusing attention to the input area, and then back at the virtual keyboard.

In one disclosed embodiment, a method for an electronic device having a touch-sensitive display and processor is disclosed. The method comprises displaying in a display area of the touch-sensitive display a virtual keyboard. In addition, the method comprises displaying within the virtual keyboard a plurality of keys, each of at least some of the keys corresponding to one or more different characters of a plurality of characters. The method also comprises detecting a selection of one or more of the keys. In addition, the method comprises generating a set of characters based on the one or more characters corresponding to the selected keys. The method also comprises displaying the set of characters within or substantially within the virtual keyboard. In addition, the method comprises detecting a gesture associated with the displayed set of characters, and, in response to detecting the gesture, removing the displayed set of characters from the virtual keyboard.

In another disclosed embodiment, an electronic device is provided. The electronic device includes a touch-sensitive display, one or more processors, one or more memories, and instructions stored on the one or more memories. The instructions, when executed by the one or more processors, cause the electronic device to perform the steps of: displaying in a display area of the touch-sensitive display a virtual keyboard, displaying within the virtual keyboard a plurality of keys, each of at least some of the keys corresponding to one or more different characters of a plurality of characters, detecting a selection of one or more of the keys, generating a set of characters based on the one or more characters corresponding to the selected keys, displaying the set of characters within or substantially within the virtual keyboard, detecting a gesture associated with the displayed set of characters, and removing the displayed set of characters from the virtual keyboard in response to detecting the gesture.

In another disclosed embodiment, an electronic device is provided. The electronic device includes a touch-sensitive display and a processor. The processor is configured to display in a display area of the touch-sensitive screen a virtual keyboard, display within the virtual keyboard a plurality of keys, display within the display area a viewing pane configured to hold a predetermined amount of text, detect selection of one or more of the keys forming a prefix text portion, the prefix text portion comprising one or more characters, display the prefix text portion in the viewing pane, determine one or more potential completion text portions as a function of the prefix text portion, display the one or more potential completion text portions proximate to selected keys of the virtual keyboard, each selected key being selected based on a first character in each of the one or more displayed potential completion text portions, detect a gesture associated with one of the potential completion text portions, and responsive at least in part to the detected gesture, alter display of the one of the potential completion text portion associated with the gesture.

In another disclosed embodiment, an electronic device is provided. The electronic device includes a touch-sensitive display, a linguistic database, and a processor. The processor is configured to display in a display area of the touch-sensitive screen a virtual keyboard, display within the virtual keyboard a plurality of keys, display within the display area a viewing pane configured to hold a predetermined amount of text, detect selection of one or more of the keys forming a first text portion, the first text portion comprising one or more characters, display the first text portion in the viewing pane, determine one or more potential second text portions as a function of the first text portion, the one or more potential second text portions having the first text portion as a prefix and being selected from the linguistic database, display the one or more potential second text portions proximate to selected keys of the virtual keyboard, each selected key being selected based on a first character in each of the one or more displayed potential second text portions, detect a gesture associated with one of the potential second text portions, and responsive at least in part to the detected gesture, alter display of the one of the potential second text portion associated with the gesture.

The following detailed description refers to the accompanying drawings. Wherever possible, the same reference numbers are used in the drawings and the following description to refer to the same or similar parts. While several example embodiments are described herein, modifications, adaptations, and other implementations are possible. For example, substitutions, additions, or modifications can be made to the components illustrated in the drawings, and the example methods described herein can be modified by substituting, reordering, or adding steps to the disclosed methods. Accordingly, the foregoing general description and the following detailed description are example and explanatory only and are not limiting. Instead, the proper scope is defined by the appended claims.

In addition, numerous specific details are set forth in order to provide a thorough understanding of the example embodiments described herein. However, it will be understood by those of ordinary skill in the art that the example embodiments described herein can be practiced without these specific details. Furthermore, well-known methods, procedures and components have not been described in detail so as not to obscure the example embodiments described herein.

Various embodiments for removing or replacing on-keyboard prediction candidates are disclosed. Example embodiments described herein may receive character inputs, generate sets of predicted characters based on the received character inputs, and display the sets of predicted characters at or near keys that correspond to characters in the sets of predicted characters. Example embodiments described herein further enable a user to remove or replace predicted characters that are displayed at or near keys.

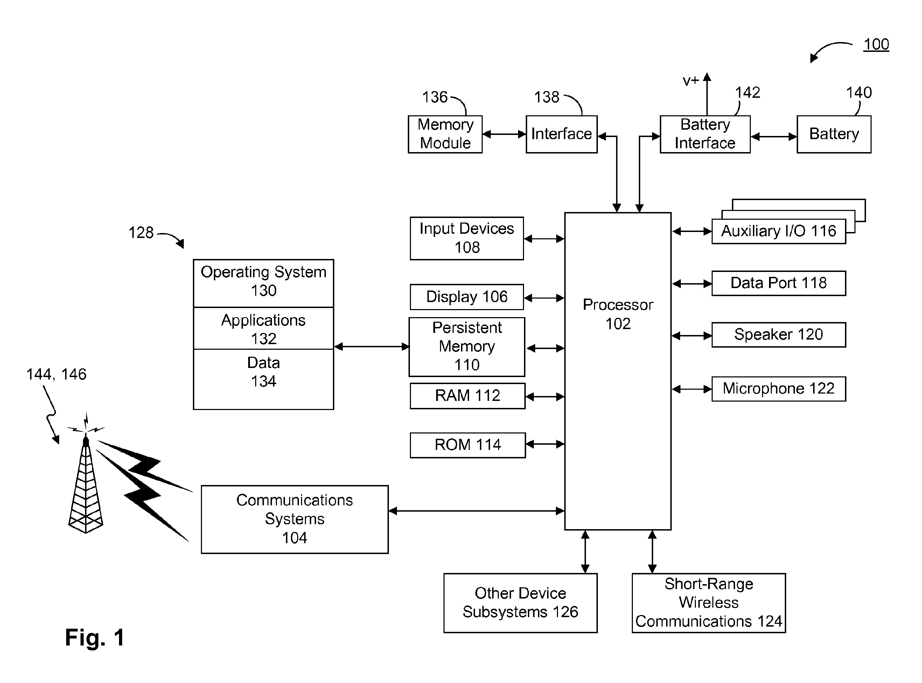

Reference is now made to **Fig. 1****,** which illustrates in detail example communication device 100 in which example embodiments can be applied. Communication device 100 is a two-way communication device having data and voice communication capabilities, and the capability to communicate with other computer systems, for example, via the Internet. Depending on the functionality provided by communication device 100, in various embodiments communication device 100 can be a handheld device, a multiple-mode communication device configured for both data and voice communication, a smartphone, a mobile telephone, a netbook, a gaming console, a tablet, or a PDA (personal digital assistant) enabled for wireless communication.

Communication device 100 includes a case (not shown) housing the components of communication device 100. In some embodiments device 100 has a rectangular shape with two planar sides, although other configurations may be adopted. The internal components of communication device 100 can, for example, be constructed on a printed circuit board (PCB). The description of communication device 100 herein mentions a number of specific components and subsystems. Although these components and subsystems can be realized as discrete elements, the functions of the components and subsystems can also be realized by integrating, combining, or packaging one or more elements in any suitable fashion.

Communication device 100 includes a controller comprising at least one processor 102 (such as a microprocessor), which controls the operation of communication device 100. Processor 102 can be a single microprocessor, multiple microprocessors, field programmable gate arrays (FPGAs), digital signal processors (DSPs) capable of executing particular sets of instructions, or any circuit capable of electrically coupling the device subsystems. Processor 102 interacts with device subsystems such as a communication system 104 for exchanging radio frequency signals with a wireless network (for example WAN 144 and/or PLMN 146) to perform communication functions.

Processor 102 also interacts with additional device subsystems including a display 106 such as a liquid crystal display (LCD) screen or any other appropriate display, input devices 108 such as a keyboard and control buttons, persistent memory 110, random access memory (RAM) 112, read only memory (ROM) 114, auxiliary input/output (I/O) subsystems 116, data port 118 such as a conventional serial data port or a Universal Serial Bus (USB) data port, speaker 120, microphone 122, short-range wireless communications subsystem 124 (which can employ any appropriate wireless (for example, RF), optical, or other short range communications technology), and other device subsystems generally designated as 126. Some of the subsystems shown in **Fig. 1** perform communication-related functions, whereas other subsystems can provide "resident" or on-device functions.

On one planar side of device 100 is the display 106 that can be realized as a touch-sensitive display in some embodiments. The touch-sensitive display can be constructed using a touch-sensitive input surface coupled to an electronic controller and which overlays the visible element of display 106. The touch-sensitive overlay and the electronic controller provide a touch-sensitive input device and processor 102 interacts with the touch-sensitive overlay via the electronic controller. In some embodiments the touch-sensitive overlay may extend beyond a display area of display 106 to the edges of the side of communication device 100.

Communication system 104 includes one or more communication systems for communicating with wireless WAN 144 and wireless access points within the wireless network. The particular design of communication system 104 depends on the wireless network in which communication device 100 is intended to operate. Communication device 100 can send and receive communication signals over the wireless network after the required network registration or activation procedures have been completed.

Processor 102 operates under stored program control and executes software modules 128 stored in a tangible non-transitory computer-readable storage medium such as persistent memory 110, which can be a flexible disk, a hard disk, a CD-ROM (compact disk-read only memory), a MO (magneto-optical) disk, a DVD-ROM (digital versatile disk-read only memory), a DVD RAM (digital versatile disk-random access memory), or a semiconductor memory. Software modules 128 can also be stored in a computer-readable storage medium such as ROM 114, or any appropriate persistent memory technology, including EEPROM, EAROM, and FLASH. These computer-readable storage mediums store computer-readable instructions for execution by processor 102 to perform a variety of functions on communication device 100.

Software modules 128 can include operating system software 130, used to control operation of communication device 100. Additionally, software modules 128 can include software applications 132 for providing additional functionality to communication device 100. Software applications 132 can further include a range of applications, including, for example, e-mail messaging application, address book, spell check application, text prediction application, notepad application, Internet browser application, voice communication (i.e., telephony) application, mapping application, or a media player application, or any combination thereof. Each of software applications 132 can include layout information defining the placement of particular fields and graphic elements (for example, text fields, input fields, icons, etc.) in the user interface (i.e., display 106) according to the application.

In some embodiments, persistent memory 110 stores data 134, including linguistic data stored in a database structure. The linguistic data is used, for example, by one or more of the applications, such as the spell check application and the text prediction application. The linguistic data may include default linguistic data, such as words and/or groups of words, with a corresponding number for each word or group of words indicating the number of words in the word or group of words. The linguistic data may also include custom linguistic data, such as words or groups of words previously entered by the user. The linguistic data may also include data acquired from a device other than communication device 100. In certain embodiments, data 134 also includes service data comprising information required by communication device 100 to establish and maintain communication with the wireless network (for example WAN 144 and/or PLMN 146.

In some embodiments, auxiliary input/output (I/O) subsystems 116 comprise an external communication link or interface, for example, an Ethernet connection. In some embodiments, device 100 includes one or more sensors such as an accelerometer, GPS, temperature sensor, and pressure sensor. In some embodiments, auxiliary I/O subsystems 116 can further comprise one or more input devices, including a pointing or navigational tool such as an optical trackpad, clickable trackball, scroll wheel or thumbwheel, or one or more output devices, including a mechanical transducer such as a vibrator for providing vibratory notifications in response to various events on communication device 100 (for example, receipt of an electronic message or incoming phone call), or for other purposes such as haptic feedback (touch feedback).

In some embodiments, communication device 100 also includes one or more removable memory modules 136 (typically comprising FLASH memory) and a memory module interface 138. Among possible functions of removable memory module 136 is to store information used to identify or authenticate a subscriber or the subscriber's account to a wireless network (for example WAN 144 or PLMN 146). For example, in conjunction with certain types of wireless networks, such as GSM and successor networks, removable memory module 136 is referred to as a Subscriber Identity Module (SIM). Memory module 136 is inserted in or coupled to memory module interface 138 of communication device 100 in order to operate in conjunction with the wireless network.

Communication device 100 also includes a battery 140 which furnishes energy for operating communication device 100. Battery 140 can be coupled to the electrical circuitry of communication device 100 through a battery interface 142, which can manage such functions as charging battery 140 from an external power source (not shown) and the distribution of energy to various loads within or coupled to communication device 100. Short-range wireless communications subsystem 124 is an additional optional component that provides for communication between communication device 100 and different systems or devices, which need not necessarily be similar devices. For example, short-range wireless communications subsystem 124 can include an infrared device and associated circuits and components, or a wireless bus protocol compliant communication device such as a BLUETOOTH® communication module to provide for communication with similarly-enabled systems and devices.

A predetermined set of applications that control basic device operations, including data and possibly voice communication applications can be installed on communication device 100 during or after manufacture. Additional applications or upgrades to operating system software 130 or software applications 132 can also be loaded onto communication device 100 through the wireless network (for example WAN 144 and/or PLMN 146), auxiliary I/O subsystem 116, data port 118, short-range wireless communication subsystem 124, or other suitable subsystems 126. The downloaded programs or code modules can be permanently installed, for example, written into the persistent memory 110, or written into and executed from RAM 112 for execution by processor 102 at runtime.

Communication device 100 provides, for example, three modes of communication: a data communication mode, a voice communication mode, and a video communication mode. In the data communication mode, a received data signal such as a text message, an e-mail message, Web page download, or an image file are processed by communication system 104 and input to processor 102 for further processing. For example, a downloaded Web page can be further processed by a browser application, or an e-mail message can be processed by an e-mail message messaging application and output to display 106. A user of communication device 100 can also compose data items, such as e-mail messages, for example, using the input devices, such as auxiliary I/O subsystem 116, in conjunction with display 106. These composed items can be transmitted through communication system 104 over the wireless network (for example WAN 144 or PLMN 146). In the voice communication mode, communication device 100 provides telephony functions and operates as a typical cellular phone. In the video communication mode, communication device 100 provides video telephony functions and operates as a video teleconference terminal. In the video communication mode, communication device 100 utilizes one or more cameras (not shown) to capture video of video teleconference.

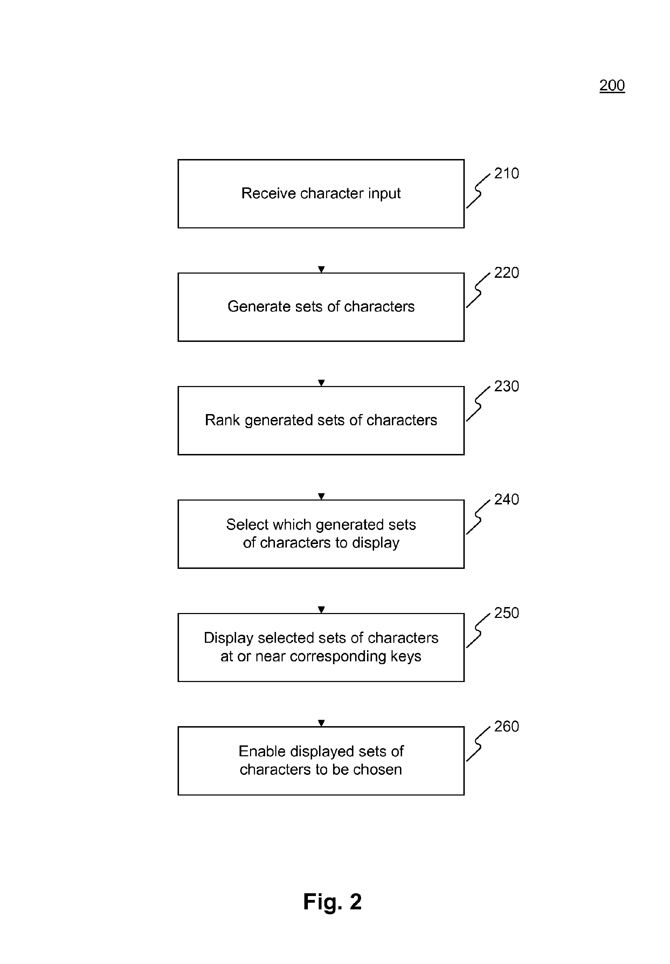

Reference is now made to Fig. 2, which depicts a flow diagram of an example method 200 for predicting and displaying sets of characters. Method 200 begins by receiving an input of one or more characters (step 210). For example, processor 102 of device 100 may receive characters from a virtual keyboard displayed on a touch-sensitive display. The virtual keyboard has one or more rows of selectable keys, where each key is assigned a location in a row, each key is assigned a character, and each character is displayed on the assigned key. For example, the virtual keyboard is configured in accordance with the QWERTY keyboard layout. Key selection on the virtual keyboard causes character input. The inputted characters may be displayed in an input field that displays characters input using the virtual keyboard. As used herein, a character can be any alphanumeric character set in device 100, such as, for example, a letter, a number, a symbol, a space, or a punctuation mark.

According to method 200 the processor 102 generates one or more sets of characters, such as for example, words, phrases, acronyms, names, slang, colloquialisms, abbreviations, or any combination thereof based on the input received in step 210 (step 220). The sets of characters may include, for example, sets of characters that are stored in a dictionary in a memory of the electronic device, sets of characters that were previously inputted by a user, sets of characters based on a hierarchy or tree structure, or any other sets of characters that are selected by a processor based on a predefined arrangement. For example, using a text prediction application the processor may access data 134, including the stored linguistic data, to identify the one or more sets of characters in step 220.

In some example embodiments, the processor 102 uses contextual data for generating sets of characters. Contextual data considers the context of characters in the input field. Contextual data may include information about, for example, a set of characters previously inputted by a user, grammatical attributes of the characters inputted in the input field (e.g., whether a noun or a verb is needed as the next set of characters in a sentence), or any combination thereof. For example, if the set of characters "the" has already been inputted into the input field, the processor may use the contextual data to determine that a noun-instead of a verb-will most likely be the next set of characters after "the." Likewise, if the set of characters "Guy Lafleur played in the National Hockey" was inputted, based on the context, the processor may determine the subsequent set of characters is likely "League." Using the contextual data, the processor may also determine whether an inputted character was incorrect. For example, the processor may determine that an inputted character was supposed to be a "w" instead of an "a", given the proximity of these characters on a QWERTY virtual keyboard.

Processor 102 may, in some example embodiments, include an affix as a generated set of characters, such as, for example, an adverb ending, an adjective ending, different verb tenses, a plural ending or a plural form. Any known predictive technique or software can be used to process the received input and the contextual data in generating the sets of characters at step 220.

In some example embodiments, the sets of characters generated at step 220 can begin with the same character received as input at step 210. For example, if the characters "pI" have been received as input using a virtual keyboard, these characters will be received by the processor as the character input. In such embodiments, the sets of characters generated at step 220 would all begin with "pI", such as "please" or "plot." Similarly, if the user has input the characters "child", the affixes generated at step 220 could include, for example, "-ren", to make the set of characters "children", or "-ish", to make the set of characters "childish."

In some example embodiments, the sets of characters generated at step 220 may include the characters received as input at step 210 in any position. For example, if the received input is an "x", the processor may generate "example", "xylophone", or "fax" as sets of characters.

In addition, in some example embodiments, the sets of characters generated at step 220 may include characters assigned to the same key as the input characters. For example, if a given key can be used to input either "a" or "b", and the received input is an "a", the processor may generate "banana" or "apple" as sets of characters.

In addition, in some example embodiments, the input characters are representative of a prefix and the sets of characters are representative of a completion text portion. For example, if the input characters (i.e., the prefix) are "appl", the sets of characters (i.e., the completion text portions) can be "e", "ication", "ying", representative of the linguistic objects "apple", "application", and "applying". In some embodiments, the completion text portions are found by searching the linguistic data source for the prefix combined with possible completion text portions.

Returning to the example method 200, the processor 102 ranks the generated sets of characters (step 230). The ranking may reflect, for example, the likelihood that a candidate set of characters is intended by a user or the likelihood that a candidate set of characters will be chosen by a user compared to another candidate set of characters. In some embodiments, the ranking may be based on contextual data. For example, in some embodiments, the electronic device may be configured to rank nouns or adjectives higher based on the received characters. If the received characters are suggestive of a noun or adjective, the processor, using the contextual data, may rank the nouns or adjectives corresponding to what the user is typing higher than other parts of speech. In some embodiments, sets of characters including adjective affixes (such as "-ish" or "-ful"), phrases, plurals, or combinations thereof may also be ranked. In some embodiments, contextual data may include information about which programs or applications are currently running or being used on the electronic device. For example, if the device is running an email application, then sets of characters associated with that device's email application, such as sets of characters from the device's contact list, can be used to determine the ranking. N-grams, such as unigrams, bigrams, and trigrams, may be also used in the ranking of the sets of characters. The geolocation of the electronic device may also be used in the ranking process. If, for example, the electronic device recognizes that it is located at a user's office, then sets of characters generally associated with work may be ranked higher in the list. If, on the other hand, the device determines that the device is located at a beach, then sets of characters generally associated with the beach may be ranked higher in the list.

The processor 102 selects which of the sets of characters to display based on the ranking (step 240). For example, in some embodiments, higher ranked sets of characters are more likely to be selected than lower ranked sets of characters. In addition, in some embodiments, as described in further detail below, subsequent candidate input characters of the sets of characters affects how processor 102 selects which of the sets of characters to display, in accordance with the method 200.

In some embodiments, the processor 102 displays one or more of the selected sets of characters at a location within or substantially within the keyboard corresponding to a subsequent candidate input character, predicted as the next character in a word that a user might input (step 250). For example, if a user inputs "pI", the word "please" is displayed on the key for the letter "e"-the subsequent candidate input character for that word. Similarly, the word "plus" is displayed on the key for the letter "u"-the subsequent candidate input character of the word "plus" if "pI" has already been entered. In some embodiments, a subsequent candidate input character is any alphanumeric character, such as, for example, a letter, number, symbol, or punctuation mark. If a delimiter (e.g., a <SPACE>) has been used, the selected sets of characters are placed on subsequent candidate input characters that correspond to the first letter of the selected sets of characters on a key corresponding to the delimiter.

In some embodiments, the selected sets of characters are displayed at or near keys on the virtual keyboard associated with the subsequent candidate input characters. In some embodiments, whether a set of characters is displayed at or near a key depends, for example, on the size of a candidate set of characters or the number and size of nearby candidate sets of characters. In some embodiments, gaps are provided between rows of keys, wherein a given candidate set of characters may be displayed in a gap near a key corresponding to a subsequent candidate input character.

In some embodiments, the selected sets of characters are displayed substantially within the virtual keyboard. That is, some of the pixels of a displayed set of characters may be displayed within the virtual keyboard, and some of the pixels of the displayed set of characters may be displayed in another region, such as, for example, the text input field. For example, if a key corresponding to a subsequent candidate input character of a set of characters is in a top row of the virtual keyboard, a lower displayed portion of the set of characters may be displayed within the virtual keyboard on or near the key, and an upper displayed portion of the set of characters may be displayed in the input field.

Processor 102, in some embodiments, causes display of the one or more selected sets of characters in a manner that will attract the user's attention. In some embodiments, the appearance of a displayed set of characters is enhanced or changed in a way that makes the set more readily visible to a user. For example, displayed sets of characters is displayed with backlighting, highlighting, underlining, bolding, italicizing, using combinations thereof, or in any other way for making the displayed sets of characters more visible.

When identifying the sets of characters for display at step 240, in some embodiments the processor 102 limits the displayed sets of characters to the top few or chooses among the higher ranked sets of characters. For example, if two sets of characters are both ranked high, and these sets of characters would otherwise be displayed at the same key, the electronic device could be configured to display only the highest ranked selected set of characters. In other embodiments, both sets of characters are displayed at or around the same key, or one set of characters is displayed at one key while the second set of characters is displayed at another key. In some example embodiments, the processor takes into account the display size to limit the number of selected sets of characters.

In some embodiments, the ranking is used to choose between two or more sets of characters that, when displayed on adjacent keys, would overlap with each other (e.g., because of their respective lengths). In such embodiments, the electronic device is configured to display the higher ranked set of characters on the keyboard. For example, if the set of characters "establishment" is ranked first in a list generated at step 240 after the letter "E" is inputted, "establishment" could be displayed at the "S" key. When displayed on a virtual keyboard, however, its length might occupy some space on the "A" key and the "D" key, potentially blocking a set of characters that would be displayed on or around those keys. Thus, at step 240, it is determined that "establishment" would be displayed fully, and no other set of characters would be placed at the "A" or "D" keys ahead of the first ranked set of characters "establishment." An alternative to displaying only the top ranked set of characters would be to use abbreviations or recognized shortened forms of the sets of characters, effectively permitting a long set of characters to be displayed within or mostly within the boundaries of a single key simultaneously with other sets of characters on adjacent keys of a virtual keyboard.

According to method 200, processor 102 enables displayed sets of characters to be chosen for input into the input field (step 260). In some embodiments, a given set of characters from the displayed sets of characters is chosen for entry into the input field if a predetermined gesture is detected. For example, a swipe-right gesture may cause a given set of characters closest to the gesture to be entered into the input field.

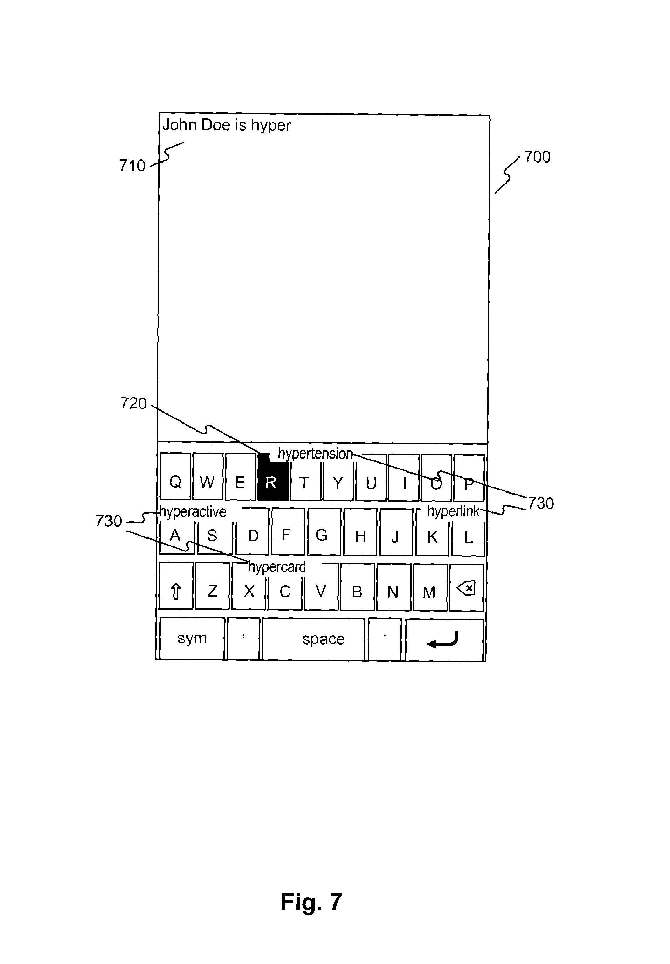

**Fig. 7** shows an example front view of a touch-sensitive display that has gone through the process of predicting and displaying sets of characters. As depicted in **Fig. 7****,** an electronic device 700, which may be, for example, device 100, has received a character input and displays "John Doe is hyper" in the input field 710, with "R" being the most recently selected key 720. As depicted in **Fig. 7****,** a plurality of sets of characters 730 are displayed on or near keys of the device 700. For example, the word "hypertension" is displayed near the "T" key since "hyper" already appears in the text entry field and thus "t" is the subsequent candidate input character for "hypertension." Similarly, "hyperlink" is displayed near the "L" key, "hyperactive" is displayed near the "A" key, and "hypercard" is displayed near the "C" key.

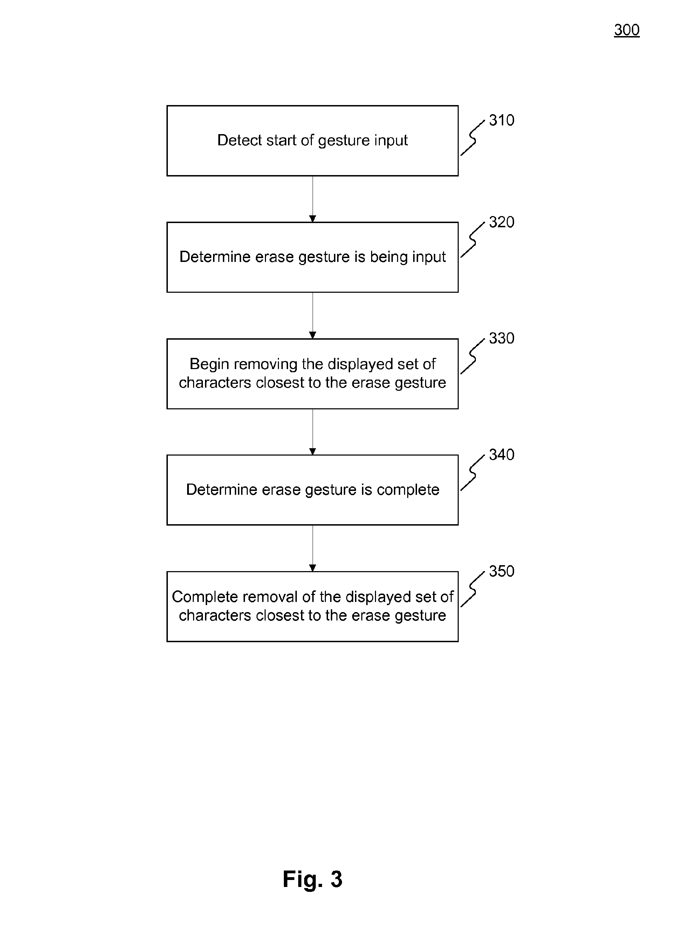

Reference is now made to **Fig. 3****,** which depicts a flow diagram of an example method 300 for removing displayed sets of characters. Method 300 begins with processor 102 detecting the start of a gesture input (step 310). The start of a gesture input may be detected, for example, when an object, such as a finger, touches a touch-sensitive display.

A gesture input may initially be ambiguous. For example, when an object initially touches a touch-sensitive display, a plurality of possible gestures may potentially be entered, such as a single key selection represented by, for example, a tap; a selection of a displayed set of characters represented by, for example, a swipe right; a cancellation of a previous input represented by, for example, a swipe left; and an erase gesture represented by, for example, a swipe back-and-forth (e.g., performing a swipe in one direction followed by a swipe in a substantially opposite direction one or more times). However, different movements may also be mapped to the example gestures or other gestures.

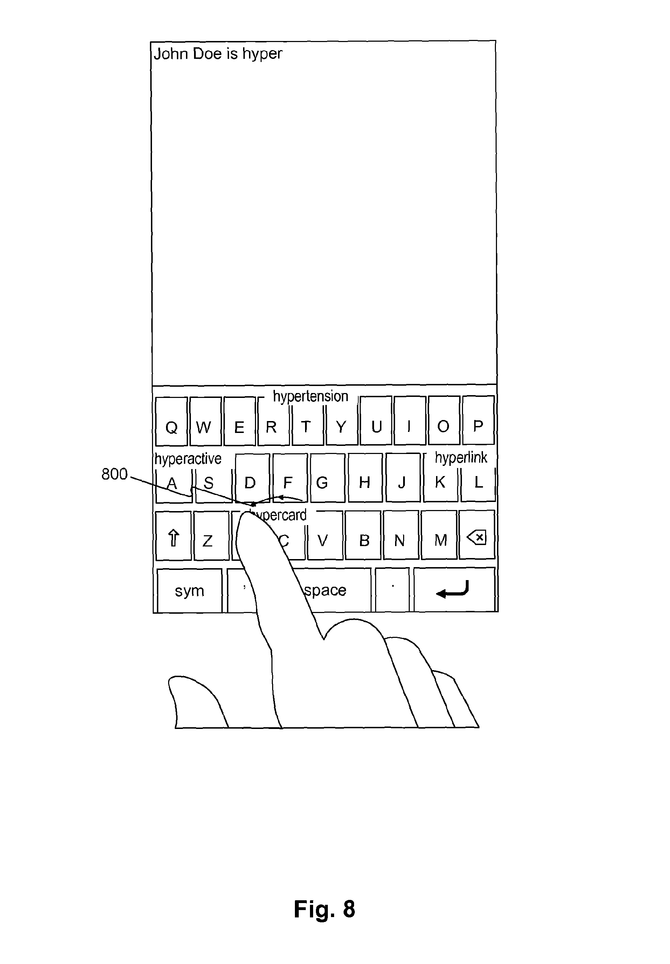

**Fig. 8** shows an example front view of a touch-sensitive display receiving a gesture input 800. As depicted in **Fig. 8****,** an object is moving in the left direction on the touch-sensitive display near the set of characters "hypercard." However, in the example shown in **Fig. 8****,** the gesture is ambiguous, since it may be representative of a swipe-left gesture or a back-and-forth swipe gesture.

Eventually, enough of the gesture input is received for an erase gesture to be unambiguously determined (step 320). For example, in some embodiments, an erase gesture may be determined if a predetermined number of changes in direction are detected over a predetermined time. Alternatively, or additionally, in some embodiments, an erase gesture may be determined if a predetermined number of changes in direction are detected over a predetermined distance. For example, if an object moves 50 pixels on the touch-sensitive display with one change in direction, an erase gesture may be detected. In contrast, for example, if an object moves 50 pixels on the touch-sensitive display without a change in direction, a different gesture may be detected, such as, for example, a cancellation gesture or a select gesture. In some embodiments, a change in direction may be detected when the direction of an object touching the touch-sensitive display changes more than a predetermined angle over a predetermined distance or time. If a movement other than a back-and-forth movement is used to represent the erase gesture, a different procedure may be used to detect the erase gesture.

After determining that an erase gesture is being input, the displayed set of characters closest to the erase gesture may begin to be removed from the display (step 330). For example, in some embodiments portions of the displayed set of characters touched by the erase gesture may be erased. Alternatively, or additionally, in some embodiments the displayed set of characters closest to the erase gesture may begin to fade out by, for example, decreasing in intensity, brightness, or opaqueness.

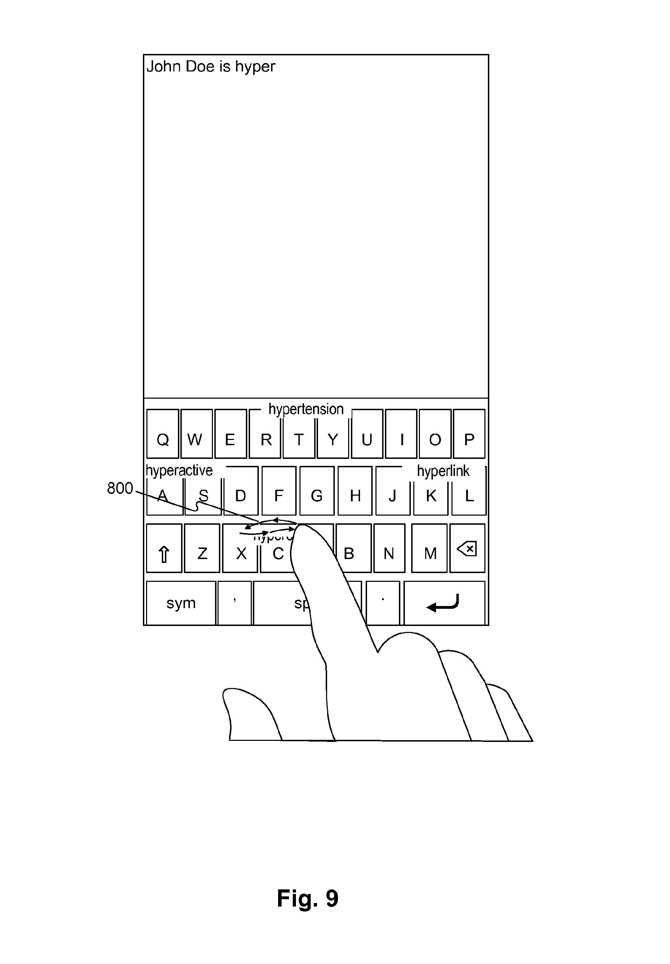

**Fig. 9** shows an example front view of a touch-sensitive display receiving a gesture input 800. As depicted in **Fig. 9****,** an object has moved in the left direction and is now moving in the right direction on the touch-sensitive display near the set of characters "hypercard." Because of the detected change in direction, the example system has determined that an erase gesture is being input. Because the set of characters "hypercard" is nearest to the erase gesture, "hypercard", as seen in **Fig. 9****,** has begun to be removed from the display.

According to method 300, processor 102 determines that the erase gesture is complete (step 340). This determination may be made, for example, when the object making the erase gesture has moved more than a predetermined number of pixels on the touch-sensitive display or has touched the touch-sensitive display for more than a predetermined amount of time. The determination may also be made, for example, when the object making the erase gesture has made a sufficient number of changes in direction on the touch-sensitive display.

After determining that the erase gesture is complete, processor 102 completes the removal of the displayed set of characters closest to the erase gesture (step 350). In some embodiments, after determining that the erase gesture is complete, prior to complete removal of the displayed set of characters closest to the erase gesture, the processor may output a prompt to confirm that the displayed set of characters should be removed. In such embodiments, a positive response to the prompt leads to the complete removal of the displayed set of characters. In some embodiments, the displayed set of characters closest to the erase gesture may still, at least in part, be displayed when the erase gesture is complete. In such embodiments, even if the object making the erase gesture is no longer touching the touch-sensitive display the processor 102 completes the removal of the displayed set of characters.

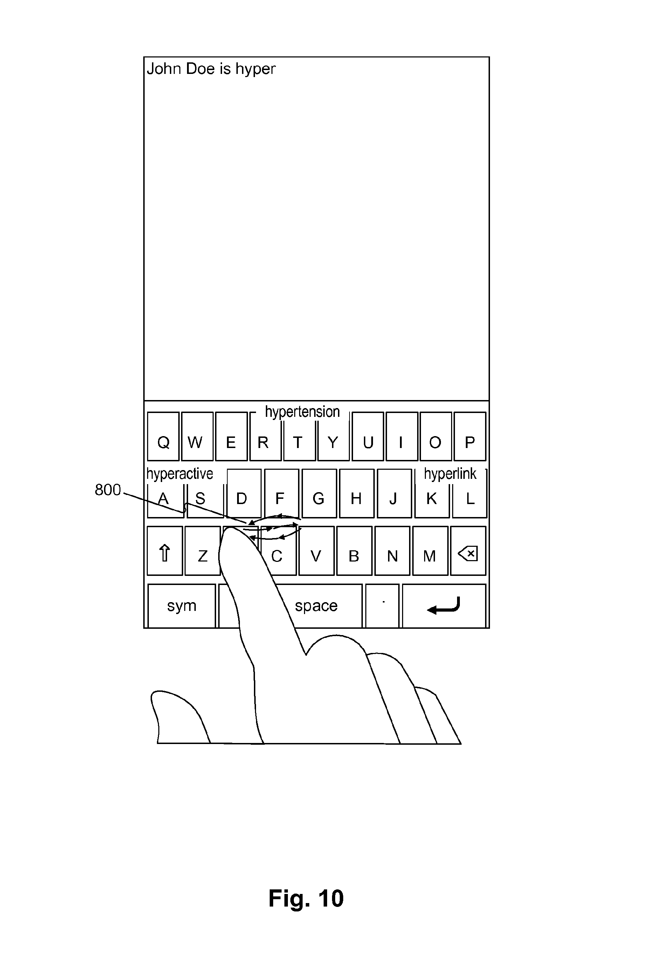

**Fig. 10** shows an example front view of a touch-sensitive display receiving a gesture input 800. As depicted in **Fig. 10****,** an object has moved in the left direction, then the right direction, and is now moving back in the left direction on the touch-sensitive display. Because of two detected changes in direction, the example system has determined that the erase gesture is complete. Because the set of characters "hypercard" was nearest to the erase gesture (as depicted in **Figs. 8** **and** **9****),** "hypercard" has been completely removed from the display.

In some embodiments, removal of a displayed set of characters may affect sets of characters generated in the future, ranking of generated sets of characters in the future, and/or subsequent selections of sets of characters for display. For example, the context data used to select sets of characters may store data regarding previously erased sets of characters, such that previously erased sets of characters would not be proposed as selected sets of characters for display. In some embodiments, an erased set of characters may again be proposed as a selected set of characters for display if the set of characters is explicitly entered by tapping of individual keys.

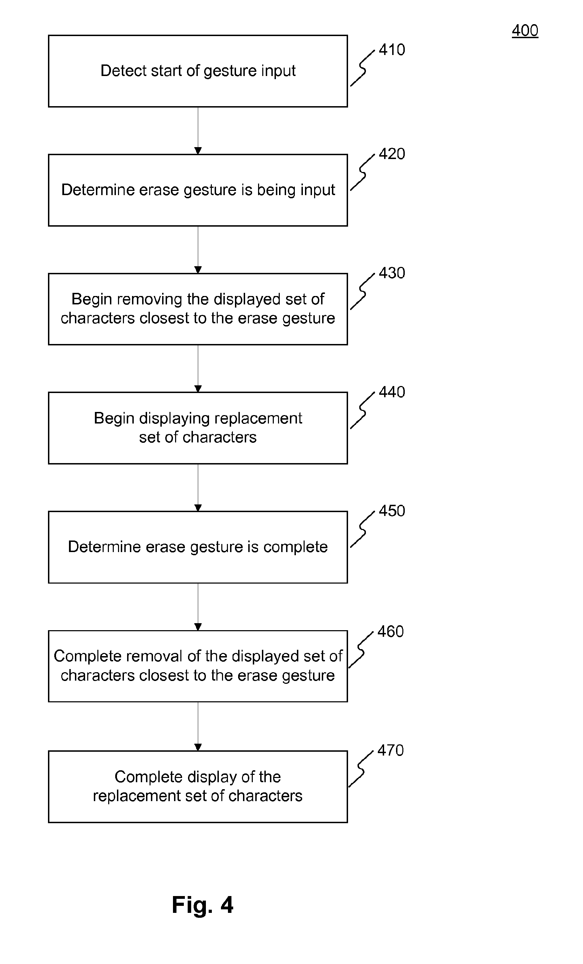

Reference is now made to **Fig. 4****,** which depicts a flow diagram of an example method 400 for replacing displayed sets of characters. According to method 400, processor 102 detects the start of a gesture input (step 410), performed in substantially the same manner as step 310 of method 300. In addition, processor 102 then determines that an erase gesture is being input (step 420) and begins removing the displayed set of characters closest to the erase gesture (step 430), performed in substantially the same manner as steps 320 and 330, respectively, of method 300.

Processor 102 then begins to display a replacement set of characters at or near the location of the set of characters being removed (step 440). In some embodiments, the replacement set of characters may be chosen based on a previously determined ranking (e.g., the ranking of step 230 in method 200). For example, if, as depicted in **Figs. 8-10****,** the set of characters "hypercard" is being removed, a replacement set of characters "hyperglycemic", representative of the highest ranked set of characters not having been displayed, may be displayed. In addition, in some embodiments, the replacement set of characters may have a subsequent candidate input character that is the same as the subsequent candidate input character of the set of characters being removed. For example, if, as depicted in **Figs. 8-10****,** the set of characters "hypercard" is being removed, a replacement set of characters "hypercube", representative of a set of characters having the same subsequent candidate input character as "hypercard", may be displayed. In some embodiments, the subsequent candidate input character of the replacement set of characters will correspond to a key that is the same as or adjacent to a key that corresponds to the subsequent candidate input character of the set of characters being removed. In some embodiments, as more of the erase gesture is received, more of the replacement set of characters may be displayed. For example, in some embodiments, the replacement set of characters may fade in as more of the erase gesture is received, by, for example, increasing intensity, brightness, or opaqueness of the replacement set of characters.

According to the method 400, processor 102 determines that the erase gesture is complete (step 450) and completes the removal of the displayed set of characters closest to the erase gesture (step 460) in substantially the same manner as steps 340 and 350, respectively, of method 300. In addition, processor 102 completes the display of the replacement set of characters (step 470). After the display of the replacement set of characters has been completed, the replacement set of characters may be input in the same manner as the other sets of characters displayed on or near the keyboard (e.g., using a swipe-right gesture).

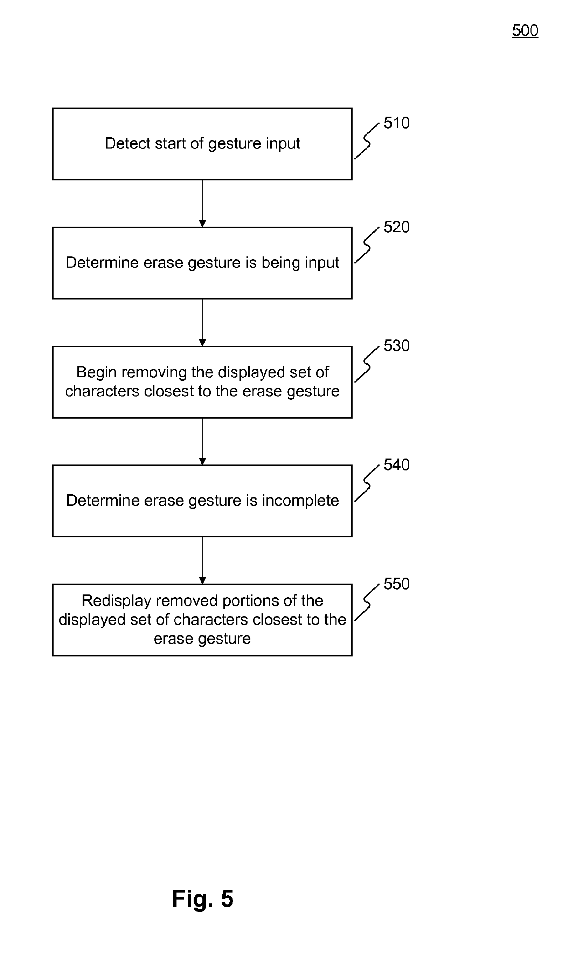

Reference is now made to **Fig. 5****,** which depicts a flow diagram of example method 500 for replacing displayed sets of characters. According to method 500, processor 102 detects the start of a gesture input (step 510), performed in substantially the same manner as step 310 of method 300. In addition, processor 102 then determines that an erase gesture is being input (step 520) and begins removing the displayed set of characters closest to the erase gesture (step 530), performed in substantially the same manner as steps 320 and 330, respectively, of method 300.

Processor 102 then determines that the erase gesture is incomplete (step 540). A determination that the erase gesture is incomplete may be made, for example, if the object making the erase gesture stops touching the touch-sensitive display before it is determined that the erase gesture is complete (e.g., the object making the erase gesture stops touching the touch-sensitive display before a determination as described in step 340 of method 300). If the processor 102 determines that the erase gesture is incomplete, the displayed set of characters closest to the erase gesture may be redisplayed as it was originally presented (e.g., removal of the displayed set of characters closest to the erase gesture performed in step 530 may be undone) (step 550).

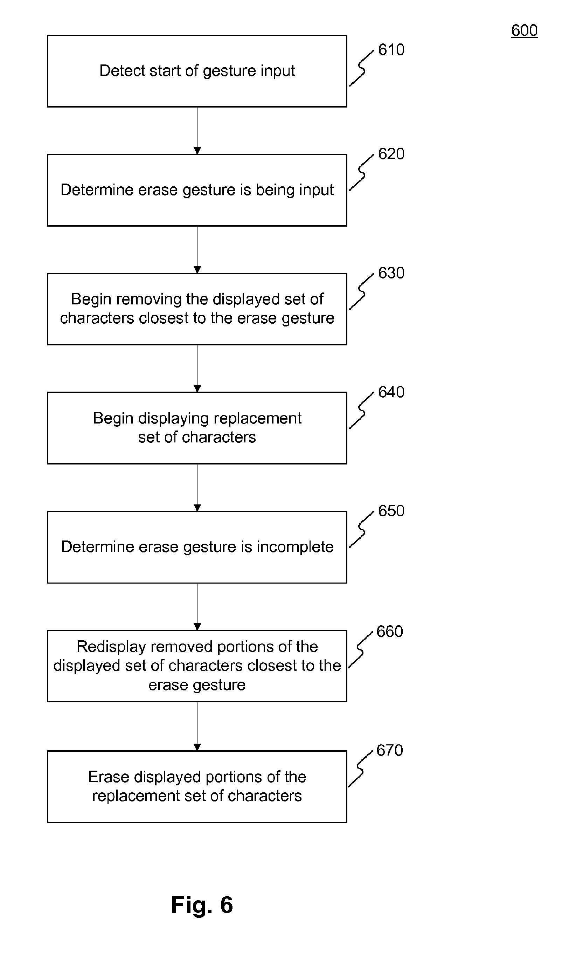

Reference is now made to **Fig. 6****,** which depicts a flow diagram of example method 600 for replacing displayed sets of characters. According to method 600, processor 102 detects the start of a gesture input (step 610), performed in substantially the same manner as step 410 of method 400. In addition, processor 102 then determines that an erase gesture is being input (step 620), begins removing the displayed set of characters closest to the erase gesture (step 630), and begins displaying a replacement set of characters (step 640), performed in substantially the same manner as steps 420, 430, and 440, respectively, of method 400.

Processor 102 then determines that the erase gesture is incomplete (step 650). A determination that the erase gesture is incomplete may be made, for example, if the object making the erase gesture stops touching the touch-sensitive display before it is determined that the erase gesture is complete (e.g., the object making the erase gesture stops touching the touch-sensitive display before a determination as described in step 450 of method 400). If the processor 102 determines that the erase gesture is incomplete, the displayed set of characters closest to the erase gesture may be redisplayed as it was originally presented (e.g., removal of the displayed set of characters closest to the erase gesture performed in step 630 may be undone) (step 660). In addition, if the processor 102 determines that the erase gesture is incomplete, portions of the replacement set of characters that have been displayed may be erased (e.g., display of the replacement set of characters performed in step 640 may be undone) (step 670).

Displaying sets of characters as prediction candidates within or substantially within a virtual keyboard enables content to be entered into a device with greater speed and accuracy. However, a user may find some displayed sets of characters distracting and/or unlikely to assist in content entry if, for example, the user believes some of the sets of characters are not intended for entry. Enabling the removal or replacement of on-keyboard prediction candidates may provide a number of advantages, such as, for example, more accurate and less distracting use of on-keyboard prediction candidates.

While the above description provides examples of one or more processes or apparatuses, it will be appreciated that other processes or apparatuses can be within the scope of the accompanying claims.

The foregoing description has been presented for purposes of illustration. It is not exhaustive and is not limited to the precise forms or embodiments disclosed. Modifications and adaptations of the embodiments will be apparent from consideration of the specification and practice of the disclosed embodiments. For example, the described implementations include hardware and software, but systems and methods consistent with the present disclosure can be implemented as hardware alone.

Computer programs based on the written description and methods of this specification are within the skill of a software developer. The various programs or program modules can be created using a variety of programming techniques. For example, program sections or program modules can be designed in or by means of Java, C, C++, assembly language, or any such programming languages. One or more of such software sections or modules can be integrated into a computer system or existing communications software.

Moreover, while illustrative embodiments have been described herein, the scope includes any and all embodiments having equivalent elements, modifications, omissions, combinations (e.g., of aspects across various embodiments), adaptations and/or alterations based on the present disclosure. The elements in the claims are to be interpreted broadly based on the language employed in the claims and not limited to examples described in the present specification or during the prosecution of the application, which examples are to be construed as non-exclusive. Further, the steps of the disclosed methods can be modified in any manner, including by reordering steps and/or inserting or deleting steps. It is intended, therefore, that the specification and examples be considered as example only, with a true scope and spirit being indicated by the following claims and their full scope of equivalents.

## Claims

1. An input method for an electronic device (100) having a touch-sensitive display (108) and a processor (102), the method comprising:
displaying in a display area of the touch-sensitive display a virtual keyboard;
displaying within the virtual keyboard a plurality of keys, each of at least some of the keys corresponding to one or more different characters of a plurality of characters;
detecting a selection of one or more of the keys;
generating one or more sets of characters based on the one or more characters corresponding to the selected keys;
displaying the sets of characters within or substantially within the virtual keyboard;
detecting a gesture associated with one of the displayed sets of characters; and
removing the one of the displayed sets of characters from the virtual keyboard in response to detecting the gesture.

2. The method of claim 1, further comprising:
waiting, prior to removing the one of the displayed sets of characters from the virtual keyboard, for an event associated with the detected gesture to occur.

3. The method of claim 2, wherein the event comprises detecting the gesture at or near the one of the displayed sets of characters for a predetermined period of time.

4. The method of claim 2 or claim 3, further comprising:
modifying, while waiting for the event, the display ofthe one ofthe displayed sets of characters.

5. The method of any preceding claim, further comprising:
displaying a replacement set of characters within the virtual keyboard in response to detecting the gesture.

6. The method of claim 5, wherein the replacement set of characters has a subsequent candidate input character that is the same as a subsequent candidate input character ofthe removed set of characters.

7. The method of claim 5, wherein the replacement set of characters has a subsequent candidate input character that corresponds to a key that is the same as or adjacent to a key that corresponds to a subsequent candidate input character of the removed set of characters.

8. The method of any preceding claim, wherein the displayed sets of characters are displayed at or near keys corresponding to subsequent candidate input characters of the sets of characters.

9. The method of any preceding claim, further comprising:
withdrawing the removed set of characters from being generated subsequent to the removal.

10. An electronic device (100) comprising:
a touch-sensitive display (108);
one or more processors (102);
one or more memories (110, 112, 114, 136);
instructions (128, 130, 132, 134) stored on the one or more memories, which, when executed by the one or more processors, cause the electronic device to perform a method of any preceding claim.

11. An electronic device (100), comprising:
a touch-sensitive display (108); and
a processor (102) configured to:
display in a display area of the touch-sensitive screen a virtual keyboard;
display within the virtual keyboard a plurality of keys;
display within the display area a viewing pane configured to hold a predetermined amount of text;
detect selection of one or more of the keys forming a prefix text portion, the prefix text portion comprising one or more characters;
display the prefix text portion in the viewing pane;
determine one or more potential completion text portions as a function of the prefix text portion;
display the one or more potential completion text portions proximate to selected keys of the virtual keyboard, each selected key being selected based on a first character in each of the one or more displayed potential completion text portions;
detect a gesture associated with one of the potential completion text portions; and
responsive at least in part to the detected gesture, alter display of the one of the potential completion text portion associated with the gesture.

12. The electronic device of claim 11, further comprising a linguistic database, and wherein the processor is further configured to:
determine one or more potential completion text portions as a function of the prefix text portion, the one or more potential completion text portions having the prefix text portion as a prefix and being selected from the linguistic database.
